# EUROPEAN PATENT APPLICATION

(11) **EP 4 391 680 A1**
(43) Date of publication of application: **26.06.2024**
(21) Application number: 22858455.3
(22) Date of filing: 15.08.2022
(51) Int. Cl.: H04W 72/04, H04W 28/04, H04W 36/08

(54) **TERMINAL AND COMMUNICATION METHOD**

(30) Priority: 17.08.2021 JP 2021133040
(71) Applicant: NTT DOCOMO, INC., Chiyoda-ku Tokyo 100-6150 (JP)
(72) Inventor: TAKAHASHI, Yuki, Tokyo 100-6150 (JP); KUMAGAI, Shinya, Tokyo 100-6150 (JP); NAGATA, Satoshi, Tokyo 100-6150 (JP); PI, Qiping, Beijing 100190 (CN); WANG, Jing, Beijing 100190 (CN); CHEN, Lan, Beijing 100190 (CN)
(74) Representative: Hoffmann Eitle
(86) International application number: PCT/JP2022/030918
(87) International publication number: WO 2023/022137

(57) **Abstract**

A terminal includes a reception unit configured to receive downlink data scheduled by SPS (Semi-Persistent Scheduling);
a control unit configured to perform at least one of: carrier switching applied to a channel that carries uplink control information; and deferring of HARQ-ACK (Hybrid Automatic Repeat reQuest-ACKnowledgement) corresponding to the downlink data; and a transmission unit configured to transmit a channel that carries uplink control information including at least the HARQ-ACK by using a resource determined based on at least one of the carrier switching and the deferring of the HARQ-ACK. The control unit performs the carrier switching earlier than the deferring of the HARQ-ACK.

## Description

### FIELD OF THE INVENTION

The present invention relates to a terminal and a communication method in a wireless communication system.

### BACKGROUND OF THE INVENTION

In 3GPP (registered trademark) (3rd Generation Partnership Project), in order to realize further larger system capacity, further faster data transmission speed, further lower latency in a wireless communication section, etc., a wireless communication method called "5G" or "NR (New Radio)" has been discussed (hereinafter, the wireless communication method is referred to as "NR"). In 5G, various wireless technologies and network architectures are being discussed to satisfy the requirement of a radio link delay of 1 ms or less while achieving throughput of 10 Gbps or more (e.g., non-patent literature 1).

Furthermore, in the 3GPP standardization, PUCCH (Physical Uplink Control Channel) carrier switching is being discussed for the extension of URLLC (Ultra-Reliable and Low Latency Communications) technology. The PUCCH carrier switching has been discussed as a method of reducing the latency of HARQ-ACK (Hybrid Automatic Repeat reQuest-ACKnowledgement) feedback in the TDD (Time Division Duplex) scheme (e.g., non-patent literature 2).

In addition, NR specifies a downlink SPS (Semi-Persistent Scheduling) in which PDSCH (Physical Downlink Shared Channel) resources are configured in advance for a terminal and activation/release is performed by DCI (Downlink Control Information), which enables low-latency data reception (For example, non-patent references 3 and 4).

### Citation List

### Non-Patent Document

Non-Patent Document 1: 3GPP TS 38.300 V16.6.0 (2021-06)
Non-Patent Document 2: 3GPP TSG RAN Meeting #88e, RP-201310, Electronic meeting, June 29-July 3, 2020
Non-Patent Document 3: 3GPP TS 38.213 V16.6.0 (2021-06)
Non-Patent Document 4: 3GPP TS 38.331 V16.5.0 (2021-06)

### SUMMARY OF THE INVENTION

### TECHNICAL PROBLEM

When PDSCH is scheduled by SPS for multiple consecutive DL (Downlink) slots, PUCCH (Physical Uplink Control Channel) for transmitting HARQ-ACK (Hybrid automatic repeat request Acknowledgement) corresponding to the PDSCH reception may collide with DL symbols or flexible symbols. In this case, the transmission of the HARQ-ACK may be postponed.

In addition, PUCCH carrier switching may be performed in a case where a slot for transmitting HARQ-ACK is allocated to downlink. On the other hand, even in a case where a slot for transmitting HARQ-ACK is allocated to downlink, if UCI (Uplink Control Information) multiplexing can be performed in the terminal, the terminal can transmit the HARQ-ACK without performing PUCCH carrier switching. In other words, depending on the order of execution of processing operations, the channel via which the UCI is transmitted may vary.

In view of the above, the present invention has been made to determine a procedure of transmitting UCI (Uplink Control Information) in a wireless communication system.

### SOLUTION TO PROBLEM

According to the disclosed technique, a terminal is provided. The terminal includes a reception unit configured to receive downlink data scheduled by SPS (Semi-Persistent Scheduling);
a control unit configured to perform at least one of: carrier switching applied to a channel that carries uplink control information; and deferring of HARQ-ACK (Hybrid Automatic Repeat reQuest-ACKnowledgement) corresponding to the downlink data; and a transmission unit configured to transmit a channel that carries uplink control information including at least the HARQ-ACK by using a resource determined based on at least one of the carrier switching and the deferring of the HARQ-ACK. The control unit performs the carrier switching earlier than the deferring of the HARQ-ACK.

### ADVANTAGEOUS EFFECTS OF INVENTION

According to the disclosed technique, it is possible to determine a procedure of transmitting UCI (Uplink Control Information) in a wireless communication system.

### BRIEF DESCRIPTION OF THE DRAWINGS

[Fig. 1] is a drawing illustrating an example (1) of a wireless communication system according to an embodiment of the present invention.
[Fig. 2] is a drawing illustrating an example (2) of a wireless communication system according to an embodiment of the present invention.
[Fig. 3] is a drawing illustrating an example (1) of PUCCH carrier switching.
[Fig. 4] is a drawing illustrating an example (2) of PUCCH carrier switching.
[Fig. 5] is a drawing illustrating an example of HARQ-ACK deferring in an embodiment of the present invention.
[Fig. 6] is a flow chart illustrating an example (1) of UCI transmission in an embodiment of the present invention.
[Fig. 7] is a flow chart illustrating an example (2) of UCI transmission in an embodiment of the present invention.
[Fig. 8] is a flow chart illustrating an example (3) of UCI transmission in an embodiment of the present invention.
[Fig. 9] is a flow chart illustrating an example (4) of UCI transmission in an embodiment of the present invention.
[Fig. 10] is a flow chart illustrating an example (5) of UCI transmission in an embodiment of the present invention.
[Fig. 11] is a flow chart illustrating an example (6) of UCI transmission in an embodiment of the present invention.
[Fig. 12] is a drawing illustrating an example of UCI multiplexing in an embodiment of the present invention.
[Fig. 13] is a drawing illustrating an example of a functional structure of a base station 10 according to an embodiment of the present invention.
[Fig. 14] is a drawing illustrating an example of a functional structure of a terminal 20 according to an embodiment of the present invention.
[Fig. 15] is a drawing illustrating an example of a hardware structure of a base station 10 or a terminal 20 according to an embodiment of the present invention.
[Fig. 16] is a drawing illustrating an example of a structure of a vehicle 2001 according to an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used accordingly. The conventional techniques include, but are not limited to, conventional NR or LTE, for example.

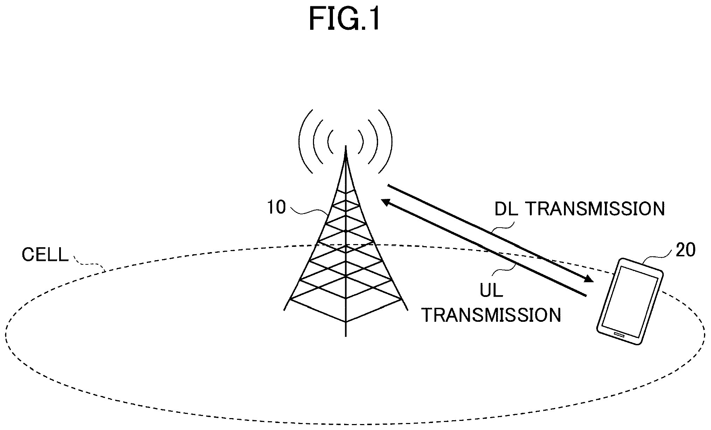

Fig. 1 is a drawing illustrating an example (1) of a wireless communication system according to an embodiment of the present invention. As illustrated in Fig. 1, a wireless communication system according to an embodiment of the present invention includes a base station 10 and a terminal 20. In Fig. 1, a single base station 10 and a single terminal 20 are illustrated as an example. There may be a plurality of base stations 10 and a plurality of terminals 20.

The base station 10 is a communication apparatus that provides one or more cells and performs wireless communications with the terminal 20. Physical resources of the radio signal may be defined in the time domain and the frequency domain, the time domain may be defined by the number of OFDM symbols, and the frequency domain may be defined by the number of sub-carriers or resource blocks. Further, a TTI (Transmission Time Interval) in the time domain may be a slot, or the TTI may be a subframe.

The base station 10 can perform carrier aggregation to communicate with the terminal 20 by bundling a plurality of cells (multiple CCs (component carriers)). One PCell (primary cell) and one or more SCells (secondary cells) are used in the carrier aggregation.

The base station 10 transmits a synchronization signal, system information, and the like, to the terminal 20. The synchronization signal is, for example, an NR-PSS and an NR-SSS. The system information may be transmitted via a NR-PBCH or a PDSCH, for example, and may be referred to as broadcast information. As shown in Fig. 1, the base station 10 transmits a control signal or data in DL (Downlink) to the terminal 20 and receives a control signal or data in UL (Uplink) from the terminal 20. Note that, here, what is transmitted via a control channel such as PUCCH and PDCCH is called a control signal, and what is transmitted via a shared channel such as PUSCH and PDSCH is called data. These names are mere examples.

The terminal 20 may be a communication apparatus that includes a wireless communication function such as a smart-phone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10. Note that the terminal 20 may be referred to as a UE, and the base station 10 may be referred to as a gNB.

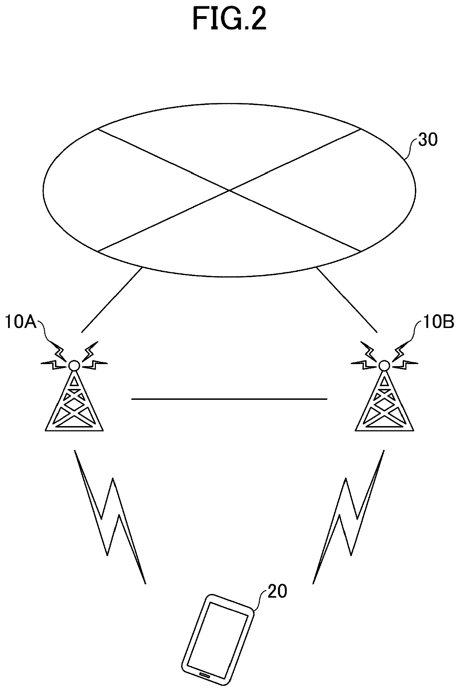

Fig. 2 is a drawing illustrating an example (2) of a wireless communication system according to an embodiment of the present invention. Fig. 2 illustrates an example of a configuration of a wireless communication system in a case where dual connectivity (DC) is performed. As shown in Fig. 2, a base station 10A serving as a Master Node (MN) and a base station 10B serving as a Secondary Node (SN) are provided. The base station 10A and the base station 10B are each connected to a core network 30. The terminal 20 is enabled to communicate with both the base station 10A and the base station 10B.

A cell group provided by the base station 10A serving as an MN is called a Master Cell Group (MCG), and a cell group provided by the base station 10B serving as an SN is called a Secondary Cell Group (SCG). In addition, in the dual connectivity, the MCG is composed of one PCell and zero or more SCells, and the SCG is composed of one PSCell (Primary SCG Cell) and zero or more SCells.

The dual connectivity may be a communication method using two communication standards, and any communication standards may be combined. For example, the combination may be NR and 6G standards, or may be LTE and 6G standards. In addition, the dual connectivity may be a communication method using three or more communication standards and may be referred to as another name different from the dual connectivity.

Processing operations in this embodiment may be performed in a system configuration shown in FIG. 1, in a system configuration shown in FIG. 2, or in other system configurations.

In the 3GPP (Registered Trademark) standardization, supporting the enhanced IoT (Internet of Things) and URLLC (Ultra-Reliable and Low Latency Communication) in NR has been discussed. In addition, enhancement of HARQ-ACK (Hybrid Automatic Repeat Request Acknowledgement) is being discussed to address URLLC requirements.

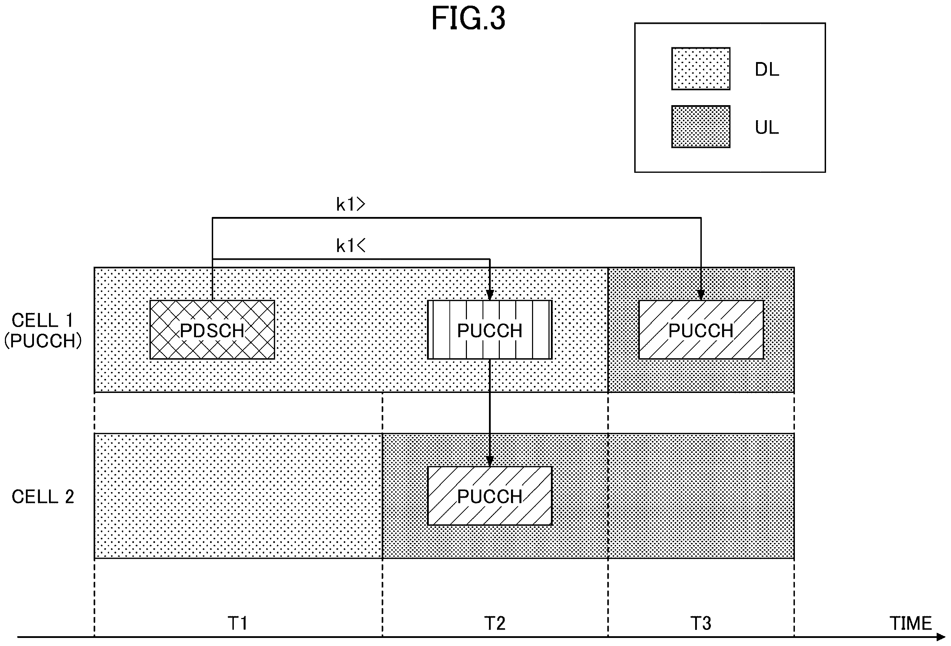

Fig. 3 is a drawing illustrating an example (1) of PUCCH carrier switching. The PUCCH carrier switching has been discussed for HARQ feedback. As illustrated in Fig. 3, in the cell 1 in which the PUCCH is transmitted, when HARQ-ACK corresponding to PDSCH at the timing T1 is to be transmitted on the PUCCH at the timing T2 that is less than K1 value, the HARQ-ACK cannot be transmitted because the timing T2 in the cell 1 is for DL, and the timing T3 for UL in the cell 1 exceeds the K1 value. Therefore, the PUCCH is transmitted in the cell 2 whose timing T2 is for UL. Note that the K1 value may be a parameter indicating the timing from the PDSCH to the HARQ feedback.

Intra-UE multiplexing of UCI (Uplink Control Information) including HARQ-ACK is performed before cancellation of a UL channel due to collision with a semi-static DL symbol, an SSB (SS/PBCH block) symbol, and an SFI (Slot Format Indication).

Here, when the PUCCH carrier switching is supported based on the semi-static configuration and the terminal 20 determines the PUCCH carrier based on the predetermined rule with a condition of colliding with an invalid symbol, the execution order of the PUCCH carrier switching and the intra-UE multiplexing affects the UL transmission result.

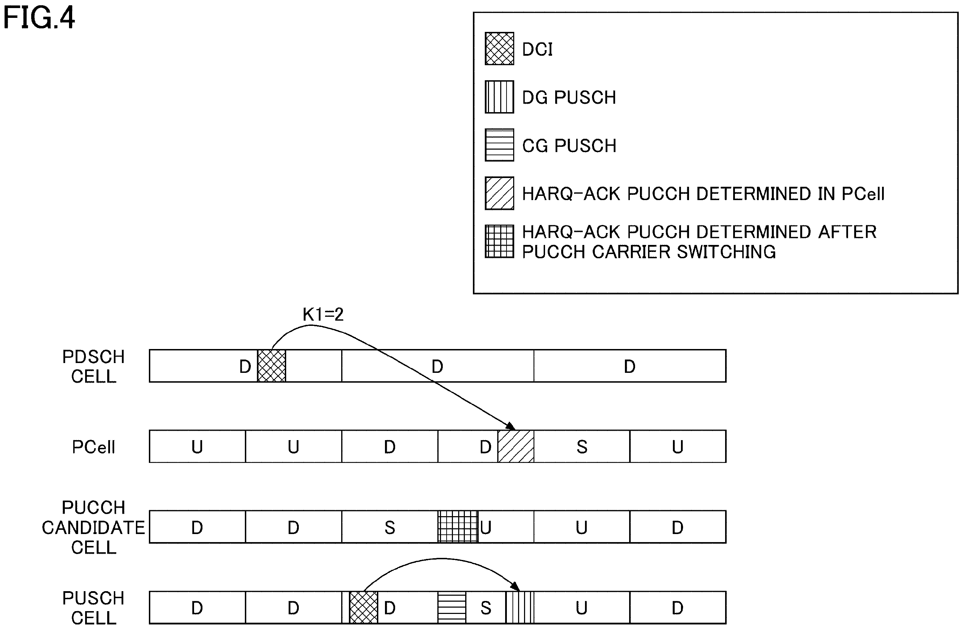

Fig. 4 is a drawing illustrating an example (2) of PUCCH carrier switching. In a case where the intra-UE multiplexing is performed prior to the PUCCH carrier switching, in the example of Fig. 4, HARQ-ACK is transmitted in DG (Dynamic grant) - PUSCH in the PUSCH cell. On the other hand, in a case where the PUCCH carrier switching is performed prior to the intra-UE multiplexing, in the example of Fig. 4, the HARQ-ACK is determined to be transmitted in the PUCCH of the PUCCH candidate cell, and further, according to the intra-UE multiplexing, the HARQ-ACK is transmitted in a CG (Configured grant) - PUSCH in the PUSCH cell.

With respect to the PUCCH carrier switching, the following methods 1) to 3) may be applied.

Method 1) PUCCH carrier switching is performed based on dynamic indication by DCI. Hereinafter, this PUCCH carrier switching is also referred to as dynamic PUCCH carrier switching.
Method 2) PUCCH carrier switching is performed according to a predetermined semi-static rule. Hereinafter, this PUCCH carrier switching is also referred to as semi-static PUCCH carrier switching.
Method 3) PUCCH carrier switching is performed based on a PUCCH cell timing pattern configured by RRC in an applicable PUCCH cell.

Note that the method 1 and the method 2 may be performed, or the method 1 and the method 3 may be performed.

Here, in a case where the SPS PDSCH is scheduled for a plurality of consecutive DL slots, there is a possibility that the PUCCH for transmitting the HARQ-ACK corresponding to the PDSCH reception collides with a DL symbol or a flexible symbol. When the PUCCH collides with a DL symbol or a flexible symbol, there may be a case in which transmission of the HARQ-ACK is to be deferred.

It is necessary to determine whether the above-described PUCCH carrier switching and the above-described SPS HARQ-ACK deferring are to be simultaneously enabled.

Further, in a case where the above-described PUCCH carrier switching and the above-described SPS HARQ-ACK deferring are to be simultaneously enabled, it is assumed that the following situations 1) to 3) occur.

1) In a case where SCS (Subcarrier Spacing) of the target cell of a PUCCH carrier switching destination is different from that of a PCell, a PSCell, or a PUCCH-SCell, a predetermined procedure is required for the SPS HARQ-ACK deferring.
2) It is necessary to determine which one of the PUCCH carrier switching and the SPS HARQ-ACK deferring is to be performed first.
3) The PUCCH carrier switching and the SPS HARQ-ACK deferring need to be performed by taking into account the multiplexing.

For example, according to the conventional technique, the intra-UE multiplexing with the same priority may be performed in the following order.

1) Multiplexing of the SPS HARQ-ACK and dynamic HARQ-ACK
2) Multiplexing of HARQ-ACK and other UCI
3) Multiplexing of UCI and PUSCH

Here, the base station 10 and the terminal 20 need not assume that the PUCCH carrier switching and the SPS HARQ-ACK deferring are to be simultaneously enabled.

In addition, the base station 10 and the terminal 20 may assume that the PUCCH carrier switching and the SPS HARQ-ACK deferring are to be simultaneously enabled.

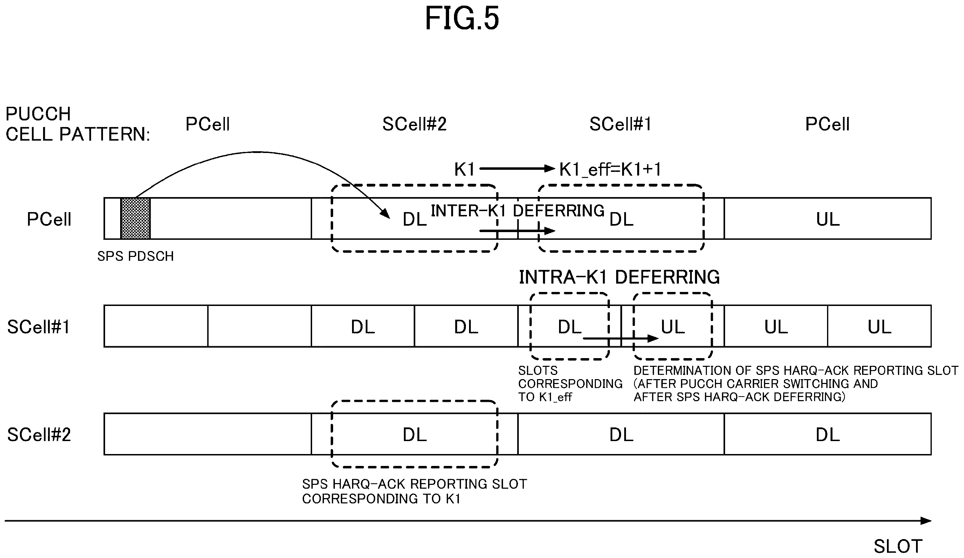

Fig. 5 is a drawing illustrating an example of HARQ-ACK deferring in an embodiment of the present invention. In a case where the SCS of the target cell of the PUCCH carrier switching destination is greater than the SCS of the PCell, the PSCell or the PUCCH-SCell, the following two types of SPS HARQ-ACK deferrings may be performed. Note that, with respect to the target cell, mapping may be performed to the SPS HARQ-ACK reporting timing, based on the PUCCH cell pattern.

The first SPS HARQ-ACK deferring is an "inter-K1 deferring" in which the K1 value is increased in the PCell, PSCell, or PUCCH-SCell. As shown in Fig. 5, for example, in the PCell, the HARQ-ACK corresponding to the SPS-PDSCH collides with a DL symbol of the SCell #2 specified by the PUCCH cell pattern, and the transmission is deferred to the next slot according to K1_eff = K1 + 1. This deferring is referred to as an inter-K1 deferring.

The second SPS HARQ-ACK deferring is an "intra-K1 deferring" in which the transmission is deferred in a plurality of slots of the target SCell mapped to one slot of the PCell, PSCell, or PUCCH-SCell without increasing the K1 value. As shown in Fig. 5, in the SCell #1 specified by the PUCCH cell pattern, the transmission is deferred to the UL slot among two slots mapped to one slot of the PCell corresponding to the K1_eff. This deferring is referred to as an intra-K1 deferring.

The intra-K1 deferring can be performed before further applying the inter-K1 deferring in a case where there is a slot, corresponding to the current K1 value, that has not been checked in the target cell.

As operations in a case where the PUCCH carrier switching and the SPS HARQ-ACK deferring are simultaneously enabled, the following operations 1) to 3) may be performed. Note that the following multiplexing case 1 is a case in which SPS HARQ-ACK is multiplexed with dynamic HARQ-ACK. The multiplexing case 2 is a case in which SPS HARQ-ACK is multiplexed with other UCI (e.g., SR, CSI, etc.). The multiplexing case 3 is a case in which SPS HARQ-ACK is multiplexed with PUSCH.

1) PUCCH carrier switching may be performed prior to SPS HARQ-ACK deferring.
2) Multiplexing may be performed or need not be performed before PUCCH carrier switching. Options 1) - 5) shown below may be applied.

Option 1) Multiplexing case 1, multiplexing case 2, and multiplexing case 3 may be checked and/or performed before PUCCH carrier switching.
Option 2) Multiplexing case 1 and multiplexing case 2 may be checked and/or performed before PUCCH carrier switching.
Option 3) Multiplexing case 1 may be checked and/or performed before PUCCH carrier switching.
Option 4) Multiplexing case 2 may be checked and/or performed before PUCCH carrier switching.
Option 5) Multiplexing need not be checked and/or performed before PUCCH carrier switching.

3) Multiplexing may be performed or need not be performed prior to SPS HARQ-ACK deferring. Options A) - E) shown below may be applied.

Option A) Multiplexing case 1, multiplexing case 2 and multiplexing case 3 may be checked and/or performed before SPS HARQ-ACK deferring.
Option B) Multiplexing case 1 and multiplexing case 2 may be checked and/or performed before SPS HARQ-ACK deferring.
Option C) Multiplexing case 1 may be checked and/or performed before SPS HARQ-ACK deferring.
Option D) Multiplexing case 2 may be checked and/or performed before SPS HARQ-ACK deferring.
Option E) Multiplexing need not be checked and/or performed before SPS HARQ-ACK deferring.

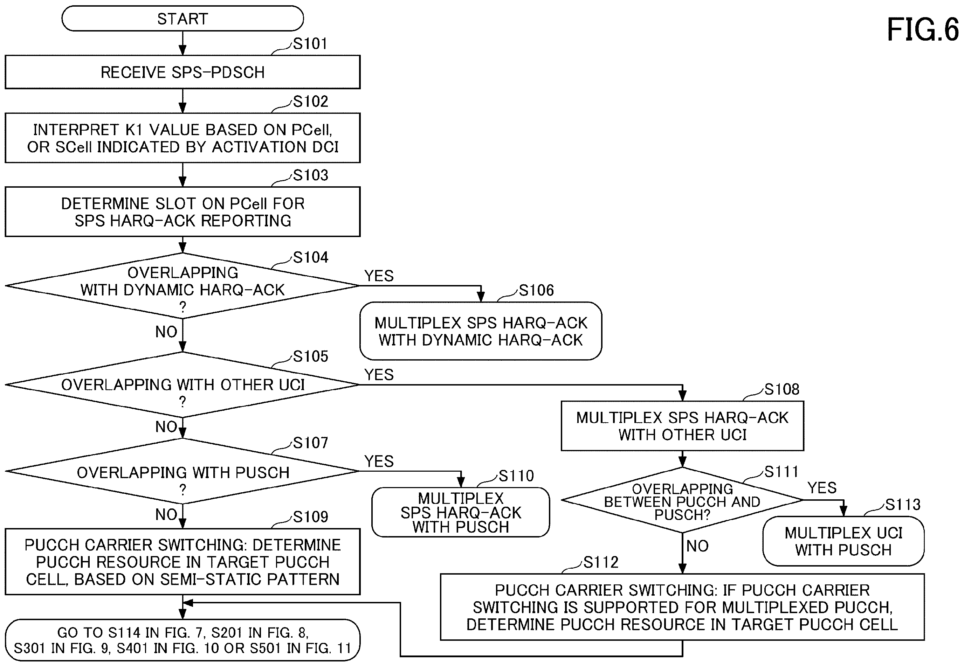

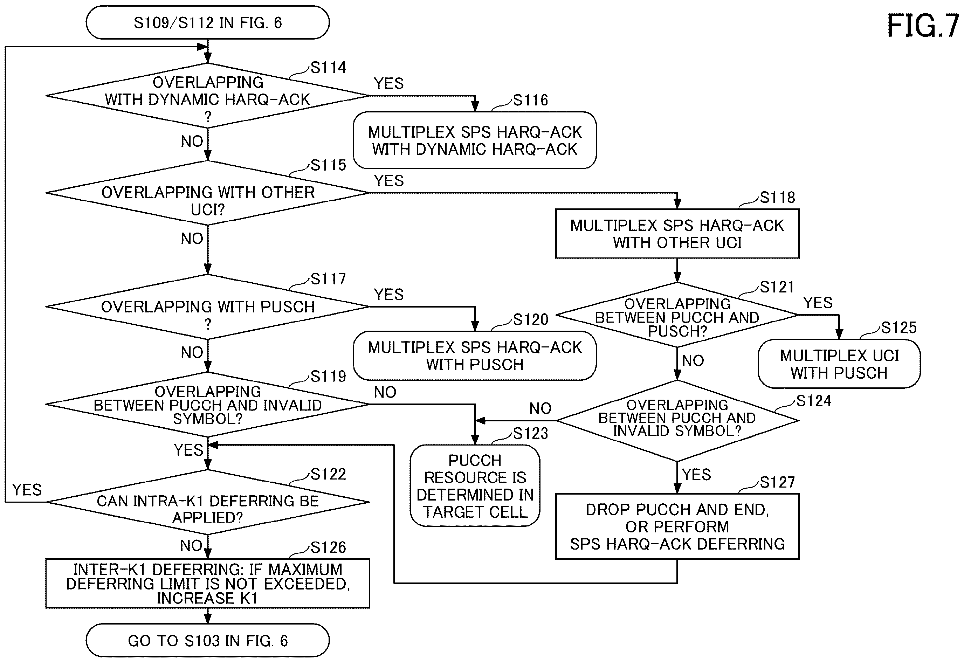

Fig. 6 is a flow chart illustrating an example (1) of UCI transmission in an embodiment of the present invention. Fig. 7 is a flow chart illustrating an example (2) of UCI transmission in an embodiment of the present invention. An example of UCI transmission to which option 1 and option A are applied will be described with reference to Figs. 6 and 7.

In step S101, the terminal 20 receives SPS-PDSCH. In the subsequent step S102, the terminal 20 interprets the K1 value based on the PCell or the SCell indicated by the enabling DCI. In subsequent step S103, the terminal 20 determines a slot of the PCell in which SPS HARQ-ACK reporting is to be performed.

In subsequent step S104, the terminal 20 determines whether the SPS HARQ-ACK overlaps with dynamic HARQ-ACK. In a case where there is no overlap (NO in S104), the process proceeds to step S105, and in a case where there is an overlap (YES in S104), the process proceeds to step S106. In step S106, the terminal 20 multiplexes the SPS HARQ-ACK with the dynamic HARQ-ACK and performs transmission to the base station 10. Note that the overlap may mean overlapping with each other in the time domain.

In step S105, the terminal 20 determines whether the SPS HARQ-ACK overlaps with other UCI. In a case where there is no overlap (NO in S105), the process proceeds to step S107, and in a case where there is an overlap (YES in S105), the process proceeds to step S108.

In step S107, the terminal 20 determines whether the SPS HARQ-ACK overlaps with PUSCH. In a case where there is no overlap (NO in S107), the process proceeds to step S109, and in a case where there is an overlap (YES in S107), the process proceeds to step S110. In step S110, the terminal 20 multiplexes the SPS HARQ-ACK with the PUSCH and performs transmission to the base station 10.

In step S108, the terminal 20 multiplexes the SPS HARQ-ACK with other UCI. In subsequent step Sill, the terminal 20 determines whether PUCCH overlaps with PUSCH. In a case where there is no overlap (NO in Sill), the process proceeds to step S112, and in a case where there is an overlap (YES in Sill), the process proceeds to step S113. In step S113, the terminal 20 multiplexes the UCI with the PUSCH and performs transmission to the base station 10.

In step S109, according to the PUCCH carrier switching, the terminal 20 determines the PUCCH resource of the target PUCCH cell, based on the semi-static pattern and proceeds to step S114 in Fig. 7.

In step S112, in a case where PUCCH carrier switching is supported for the multiplexed PUCCH, the terminal 20 determines the PUCCH resource of the target PUCCH cell and proceeds to step S114 in Fig. 7.

Note that, in a case where the PUCCH carrier switching is not performed in steps S109 and S112, the K1 value may be increased to proceed to step S103. In other words, the inter-K1 deferring may be performed.

In step S114, the terminal 20 determines whether the SPS HARQ-ACK overlaps with dynamic HARQ-ACK. In a case where there is no overlap (NO in S114), the process proceeds to step S115, and in a case where there is an overlap (YES in S114), the process proceeds to step S116. In step S116, the terminal 20 multiplexes the SPS HARQ-ACK with the dynamic HARQ-ACK and performs transmission to the base station 10.

In step S115, the terminal 20 determines whether the SPS HARQ-ACK overlaps with other UCI. In a case where there is no overlap (NO in S115), the process proceeds to step S117, and in a case where there is an overlap (YES in S115), the process proceeds to step S118.

In step S117, the terminal 20 determines whether the SPS HARQ-ACK overlaps with PUSCH. In a case where there is no overlap (NO in S117), the process proceeds to step S119, and in a case where there is an overlap (YES in S117), the process proceeds to step S120. In step S120, the terminal 20 multiplexes the SPS HARQ-ACK with the PUSCH and performs transmission to the base station 10.

In step S118, the terminal 20 multiplexes the SPS HARQ-ACK with other UCI. In subsequent step S121, the terminal 20 determines whether PUCCH overlaps with PUSCH. In a case where there is no overlap (NO in S121), the process proceeds to step S124, and in a case where there is an overlap (YES in S121), the process proceeds to step S125. In step S125, the terminal 20 multiplexes the UCI with the PUSCH and performs transmission to the base station 10.

In step S119, the terminal 20 determines whether PUCCH and an invalid symbol overlap with each other. In a case where there is an overlap (YES in S119), the process proceeds to step S122, and in a case where there is no overlap (NO in S119), the process proceeds to step S123. In step S123, a PUCCH resource is determined in the target cell.

In step S124, the terminal 20 determines whether PUCCH and an invalid symbol overlap with each other. In a case where there is an overlap (YES in S124), the process proceeds to step S127, and in a case where there is no overlap (NO in S124), the process proceeds to step S123. In step S127, terminal 20 drops PUCCH and terminates the process, or proceeds to step S122 to perform SPS HARQ-ACK deferring. That is, in a case where the SPS HARQ-ACK is already multiplexed with other UCI, the SPS HARQ-ACK deferring may be performed or need not be performed.

In step S122, the terminal 20 determines whether the intra-K1 deferring is applicable. In a case where the intra-K1 deferring is applicable, that is, in a case where there is a slot that has not been checked in the target cell corresponding to the current K1 value (YES in S122), the intra-K1 deferring is performed and the process proceeds to step S114. In a case where the intra K1 deferring is not applicable, i.e., in a case where there is no slot that has not been checked in the target cell corresponding to the current K1 value (NO in S122), the process proceeds to step S126.

In step S126, in a case where the maximum deferring limit is not exceeded, the terminal 20 increases K1, performs inter-K1 deferring, and proceeds to step S103 in Fig. 6.

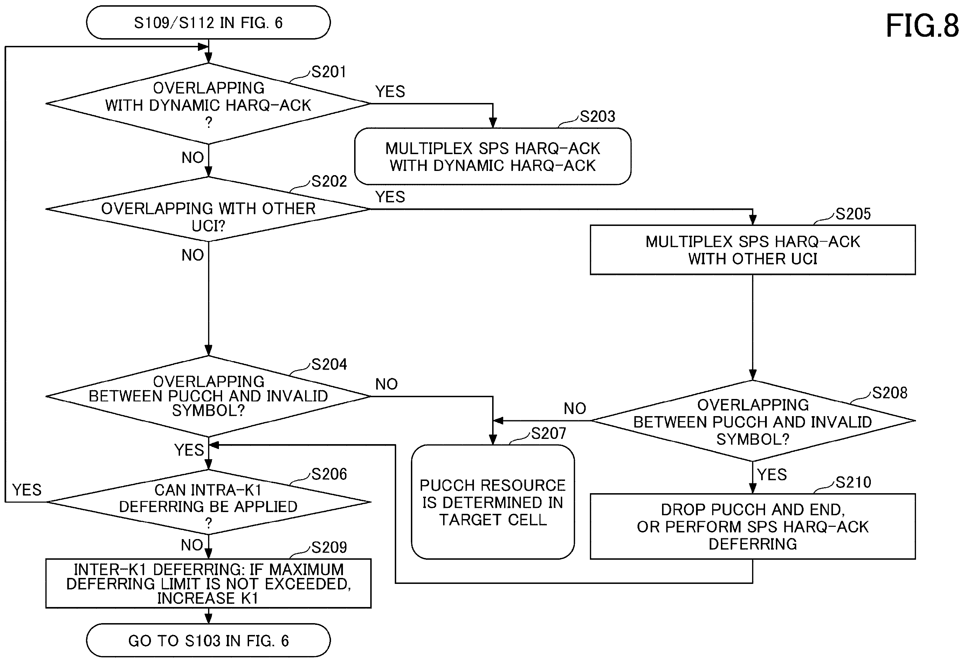

Fig. 8 is a flow chart illustrating an example (3) of UCI transmission in an embodiment of the present invention. Using Figs. 6 and 8, an example of UCI transmission in which Option 1 and Option B are applied will be described.

In Fig. 6, the steps other than step S109 and step S112 are the same as those in Fig. 6 described above.

In step S109, according to the PUCCH carrier switching, the terminal 20 determines the PUCCH resource of the target PUCCH cell, based on the semi-static pattern and proceeds to step S201 in Fig. 8.

In step S112, in a case where PUCCH carrier switching is supported for the multiplexed PUCCH, the terminal 20 determines the PUCCH resource of the target PUCCH cell and proceeds to step S201 in Fig. 8.

In step S201, the terminal 20 determines whether the SPS HARQ-ACK overlaps with dynamic HARQ-ACK. In a case where there is no overlap (NO in S201), the process proceeds to step S202, and in a case where there is an overlap (YES in S201), the process proceeds to step S203. In step S203, the terminal 20 multiplexes the SPS HARQ-ACK with the dynamic HARQ-ACK and performs transmission to the base station 10.

In step S202, the terminal 20 determines whether the SPS HARQ-ACK overlaps with other UCI. In a case where there is no overlap (NO in S202), the process proceeds to step S204, and in a case where there is an overlap (YES in S202), the process proceeds to step S205.

In step S204, the terminal 20 determines whether PUCCH and an invalid symbol overlap with each other. In a case where there is an overlap (YES in S204), the process proceeds to step S206, and in a case where there is no overlap (NO in S204), the process proceeds to step S207. In step S207, a PUCCH resource is determined in the target cell.

In step S205, the terminal 20 multiplexes the SPS HARQ-ACK with other UCI. In subsequent step S208, the terminal 20 determines whether PUCCH and an invalid symbol overlap with each other. In a case where there is an overlap (YES in S208), the process proceeds to step S210, and in a case where there is no overlap (NO in S208), the process proceeds to step S207. In step S210, terminal 20 drops PUCCH and terminates the process, or proceeds to step S206 to perform SPS HARQ-ACK deferring. That is, in a case where the SPS HARQ-ACK is already multiplexed with other UCI, the SPS HARQ-ACK deferring may be performed or need not be performed.

In step S206, the terminal 20 determines whether the intra-K1 deferring is applicable. In a case where the intra-K1 deferring is applicable, that is, in a case where there is a slot that has not been checked in the target cell corresponding to the current K1 value (YES in S206), the intra-K1 deferring is performed and the process proceeds to step S201. In a case where the intra K1 deferring is not applicable, i.e., in a case where there is no slot that has not been checked in the target cell corresponding to the current K1 value (NO in S206), the process proceeds to step S209.

In step S209, in a case where the maximum deferring limit is not exceeded, the terminal 20 increases K1, performs inter-K1 deferring, and proceeds to step S103 in Fig. 6.

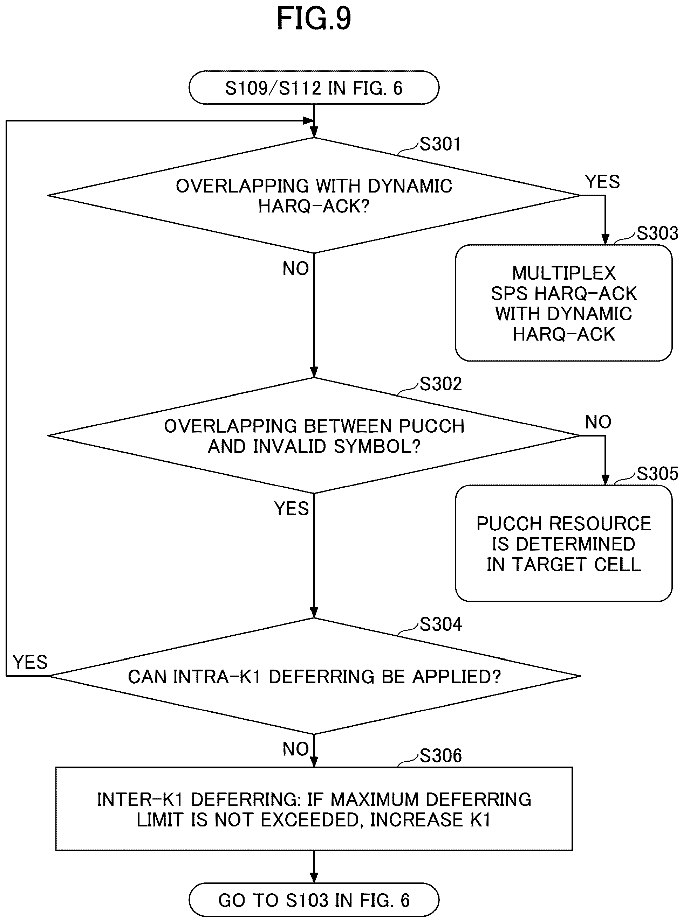

Fig. 9 is a flow chart illustrating an example (4) of UCI transmission in an embodiment of the present invention. Using Figs. 6 and 9, an example of UCI transmission in which Option 1 and Option C are applied will be described.

In Fig. 6, the steps other than step S109 and step S112 are the same as those in Fig. 6 described above.

In step S109, according to the PUCCH carrier switching, the terminal 20 determines the PUCCH resource of the target PUCCH cell, based on the semi-static pattern and proceeds to step S301 in Fig. 9.

In step S112, in a case where PUCCH carrier switching is supported for the multiplexed PUCCH, the terminal 20 determines the PUCCH resource of the target PUCCH cell and proceeds to step S301 in Fig. 9.

In step S301, the terminal 20 determines whether the SPS HARQ-ACK overlaps with dynamic HARQ-ACK. In a case where there is no overlap (NO in S301), the process proceeds to step S302, and in a case where there is an overlap (YES in S301), the process proceeds to step S303. In step S303, the terminal 20 multiplexes the SPS HARQ-ACK with the dynamic HARQ-ACK and performs transmission to the base station 10.

In step S302, the terminal 20 determines whether PUCCH and an invalid symbol overlap with each other. In a case where there is an overlap (YES in S302), the process proceeds to step S304, and in a case where there is no overlap (NO in S302), the process proceeds to step S305. In step S305, a PUCCH resource is determined in the target cell.

In step S304, the terminal 20 determines whether the intra-K1 deferring is applicable. In a case where the intra-K1 deferring is applicable, that is, in a case where there is a slot that has not been checked in the target cell corresponding to the current K1 value (YES in S304), the intra-K1 deferring is performed and the process proceeds to step S301. In a case where the intra-K1 deferring is not applicable, i.e., in a case where there is no slot that has not been checked in the target cell corresponding to the current K1 value (NO in S304), the process proceeds to step S306.

In step S306, in a case where the maximum deferring limit is not exceeded, the terminal 20 increases K1, performs inter-K1 deferring, and proceeds to step S103 in Fig. 6.

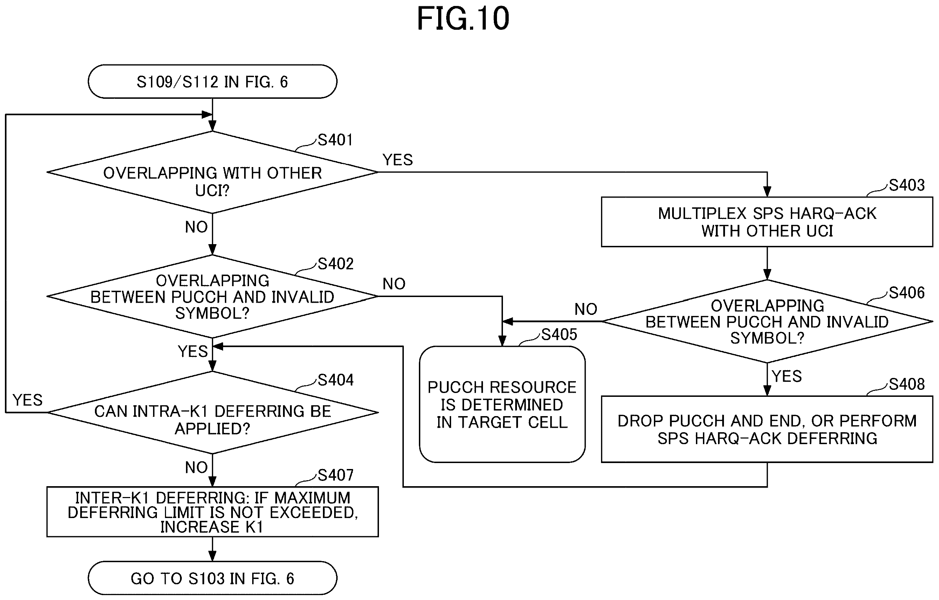

Fig. 10 is a flow chart illustrating an example (5) of UCI transmission in an embodiment of the present invention. Using Figs. 6 and 10, an example of UCI transmission in which Option 1 and Option D are applied will be described.

In Fig. 6, the steps other than step S109 and step S112 are the same as those in Fig. 6 described above.

In step S109, according to the PUCCH carrier switching, the terminal 20 determines the PUCCH resource of the target PUCCH cell, based on the semi-static pattern and proceeds to step S401 in Fig. 10.

In step S112, in a case where PUCCH carrier switching is supported for the multiplexed PUCCH, the terminal 20 determines the PUCCH resource of the target PUCCH cell and proceeds to step S401 in Fig. 10.

In step S401, the terminal 20 determines whether the SPS HARQ-ACK overlaps with other UCI. In a case where there is no overlap (NO in S401), the process proceeds to step S402, and in a case where there is an overlap (YES in S401), the process proceeds to step S403.

In step S402, the terminal 20 determines whether PUCCH and an invalid symbol overlap with each other. In a case where there is an overlap (YES in S402), the process proceeds to step S404, and in a case where there is no overlap (NO in S402), the process proceeds to step S405. In step S405, a PUCCH resource is determined in the target cell.

In step S403, the terminal 20 multiplexes the SPS HARQ-ACK with other UCI. In subsequent step S406, the terminal 20 determines whether PUCCH and an invalid symbol overlap with each other. In a case where there is an overlap (YES in S406), the process proceeds to step S408, and in a case where there is no overlap (NO in S406), the process proceeds to step S405. In step S408, terminal 20 drops PUCCH and terminates the process, or proceeds to step S404 to perform SPS HARQ-ACK deferring. That is, in a case where the SPS HARQ-ACK is already multiplexed with other UCI, the SPS HARQ-ACK deferring may be performed or need not be performed.

In step S404, the terminal 20 determines whether the intra-K1 deferring is applicable. In a case where the intra-K1 deferring is applicable, that is, in a case where there is a slot that has not been checked in the target cell corresponding to the current K1 value (YES in S404), the intra-K1 deferring is performed and the process proceeds to step S401. In a case where the intra K1 deferring is not applicable, i.e., in a case where there is no slot that has not been checked in the target cell corresponding to the current K1 value (NO in S404), the process proceeds to step S407.

In step S407, in a case where the maximum deferring limit is not exceeded, the terminal 20 increases K1, performs inter-K1 deferring, and proceeds to step S103 in Fig. 6.

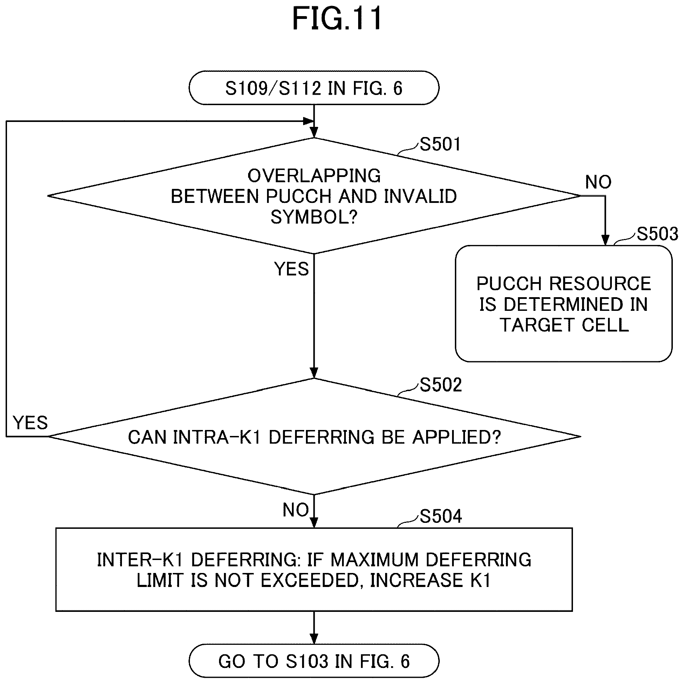

Fig. 11 is a flow chart illustrating an example (6) of UCI transmission in an embodiment of the present invention. Using Figs. 6 and 11, an example of UCI transmission in which Option 1 and Option E are applied will be described.

In Fig. 6, the steps other than step S109 and step S112 are the same as those in Fig. 6 described above.

In step S109, according to the PUCCH carrier switching, the terminal 20 determines the PUCCH resource of the target PUCCH cell, based on the semi-static pattern and proceeds to step S501 in Fig. 11.

In step S112, in a case where PUCCH carrier switching is supported for the multiplexed PUCCH, the terminal 20 determines the PUCCH resource of the target PUCCH cell and proceeds to step S501 in Fig. 11.

In step S501, the terminal 20 determines whether PUCCH and an invalid symbol overlap with each other. In a case where there is an overlap (YES in S501), the process proceeds to step S502, and in a case where there is no overlap (NO in S501), the process proceeds to step S503. In step S503, a PUCCH resource is determined in the target cell.

In step S502, the terminal 20 determines whether the intra-K1 deferring is applicable. In a case where the intra-K1 deferring is applicable, that is, in a case where there is a slot that has not been checked in the target cell corresponding to the current K1 value (YES in S502), the intra-K1 deferring is performed and the process proceeds to step S501. In a case where the intra K1 deferring is not applicable, i.e., in a case where there is no slot that has not been checked in the target cell corresponding to the current K1 value (NO in S502), the process proceeds to step S504.

In step S504, in a case where the maximum deferring limit is not exceeded, the terminal 20 increases K1, performs inter-K1 deferring, and proceeds to step S103 in Fig. 6.

In addition, the terminal 20 may perform UCI transmission to which option 2 and option A are applied. The terminal 20 may perform UCI transmission to which option 2 and option B are applied. The terminal 20 may perform UCI transmission to which option 2 and option C are applied. The terminal 20 may perform UCI transmission to which option 2 and option D are applied. The terminal 20 may perform UCI transmission to which option 2 and option E are applied.

In addition, the terminal 20 may perform UCI transmission to which option 3 and option A are applied. The terminal 20 may perform UCI transmission to which option 3 and option B are applied. The terminal 20 may perform UCI transmission to which option 3 and option C are applied. The terminal 20 may perform UCI transmission to which option 3 and option D are applied. The terminal 20 may perform UCI transmission to which option 3 and option E are applied.

In addition, the terminal 20 may perform UCI transmission to which option 4 and option A are applied. The terminal 20 may perform UCI transmission to which option 4 and option B are applied. The terminal 20 may perform UCI transmission to which option 4 and option C are applied. The terminal 20 may perform UCI transmission to which option 4 and option D are applied. The terminal 20 may perform UCI transmission to which option 4 and option E are applied.

In addition, the terminal 20 may perform UCI transmission to which option 5 and option A are applied. The terminal 20 may perform UCI transmission to which option 5 and option B are applied. The terminal 20 may perform UCI transmission to which option 5 and option C are applied. The terminal 20 may perform UCI transmission to which option 5 and option D are applied. The terminal 20 may perform UCI transmission to which option 5 and option E are applied.

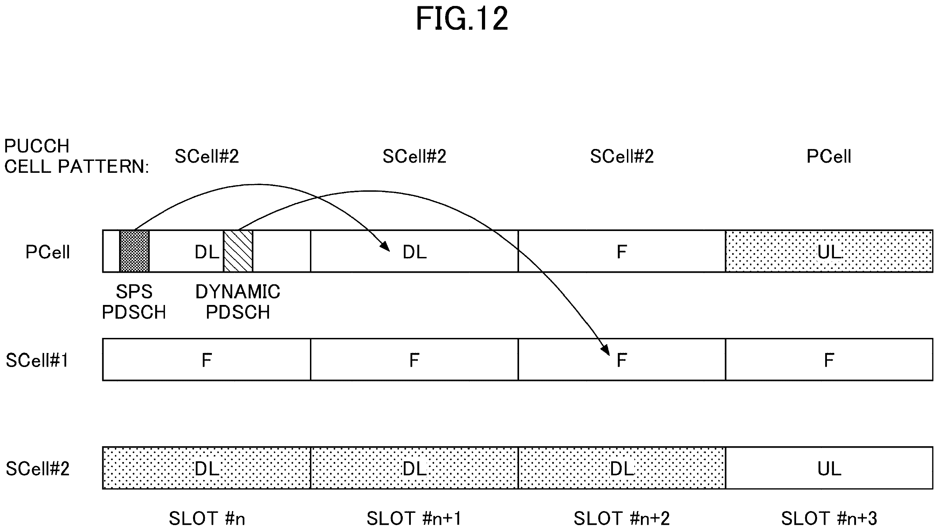

Fig. 12 is a drawing illustrating an example of UCI multiplexing in an embodiment of the present invention. For example, for the sake of easy implementation, only multiplexing of dynamic HARQ-ACK and SPS HARQ-ACK may be assumed to be performed or assumed not to be performed, as shown in Fig. 12. For example, the dynamic HARQ-ACK and SPS HARQ-ACK may be multiplexed before performing the PUCCH carrier switching, or the dynamic HARQ-ACK and SPS HARQ-ACK may be multiplexed before performing the SPS HARQ-ACK deferring.

For example, in Fig. 12, the SPS HARQ-ACK may be multiplexed with the dynamic HARQ-ACK into the PUCCH resource in slot #n+2 of SCell #1.

For example, the dynamic HARQ-ACK and SPS HARQ-ACK need not be multiplexed before performing the PUCCH carrier switching, or the dynamic HARQ-ACK and SPS HARQ-ACK need not be multiplexed before performing the SPS HARQ-ACK deferring.

For example, in Fig. 12, the SPS HARQ-ACK may be multiplexed with the dynamic HARQ-ACK into the PUCCH resource in slot #n+3 of PCell. In other words, the dynamic HARQ-ACK and the SPS HARQ-ACK may be multiplexed after performing SPS HARQ-ACK deferring.

Which of the above-described options is to be performed may be configured by an upper layer parameter. In addition, which of the above-described options is to be performed may be reported as a UE capability. Further, which of the above-described options is to be performed may be specified by technical specifications. Further, which of the above-described options is to be performed may be determined based on the configuration according to an upper layer parameter and on the UE capability report. Also, in the embodiments described above, a slot may be replaced with a sub-slot.

Note that the UE capabilities of 1)-8) shown below may be defined.

1) Whether PUCCH carrier switching is supported or not
2) Whether dynamic PUCCH carrier switching is supported or not
3) Whether semi-static PUCCH carrier switching is supported or not
4) Whether SPS HARQ-ACK deferring is supported or not
5) Whether PUCCH carrier switching and SPS HARQ-ACK deferring are both supported or not
6) Whether performing PUCCH carrier switching prior to SPS HARQ-ACK deferring is supported or not
7) Whether checking and/or performing multiplexing prior to PUCCH carrier switching is supported or not
8) Whether checking and/or performing multiplexing prior to SPS HARQ-ACK deferring is supported or not

According to the embodiments described above, when transmitting one or more UCIs, the terminal 20 can determine the resource for transmitting the UCIs by applying PUCCH carrier switching, SPS HARQ-ACK deferring and multiplexing in an appropriate order.

In other words, it is possible to determine a procedure of transmitting UCI (Uplink Control Information) in a wireless communication system.

### (Apparatus configuration)

Next, a functional configuration example of the base station 10 and the terminal 20 for performing the processes and operations described above will be described. The base station 10 and terminal 20 include functions for implementing the embodiments described above. It should be noted, however, that each of the base stations 10 and the terminal 20 may include only proposed functions in one of the embodiments.

### <Base station 10>

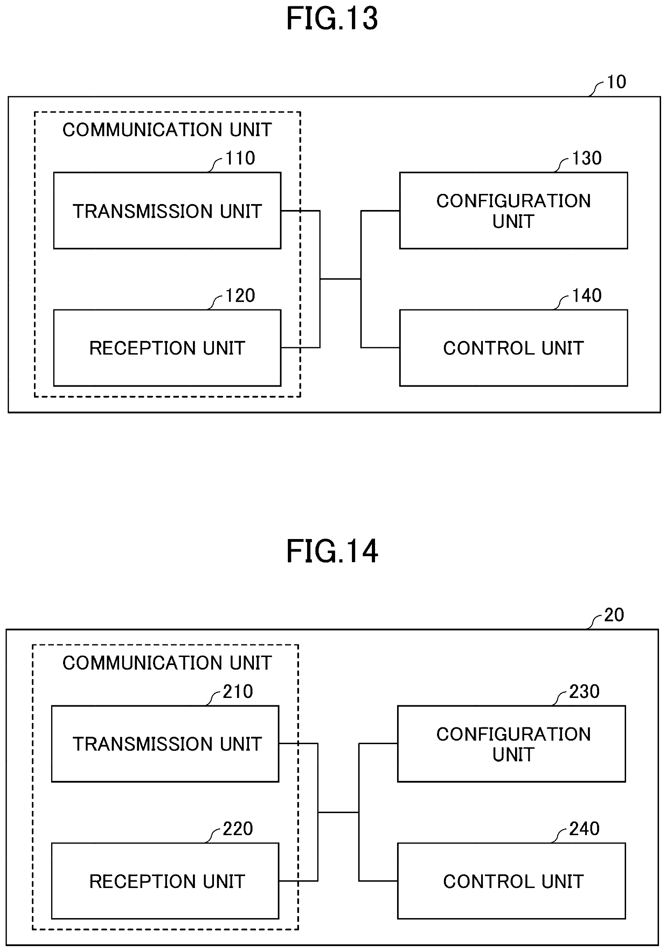

Fig. 13 is a diagram illustrating an example of a functional configuration of the base station 10. As shown in Fig. 13, the base station 10 includes a transmission unit 110, a reception unit 120, a configuration unit 130, and a control unit 140. The functional structure illustrated in Fig. 13 is merely an example. Functional divisions and names of functional units may be anything as long as operations according to an embodiment of the present invention can be performed. The transmission unit 110 and the reception unit 120 may be referred to as a communication unit.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. Further, the transmission unit 110 has a function of transmitting NR-PSS, NR-SSS, NR-PBCH, DL/UL control signals, the DL data, and the like, to the terminal 20. In addition, the transmission unit 110 transmits configuration information, or the like, described in the embodiment.

The configuration unit 130 stores preset configuration information and various configuration information items to be transmitted to the terminal 20 in a storage apparatus and reads the preset configuration information from the storage apparatus if necessary. The control unit 140 controls the entire base station 10 including, for example, control of signal transmission and reception. Note the functional unit related to signal transmission in the control unit 140 may be included in the transmission unit 110, and the functional unit related to signal reception in the control unit 140 may be included in the reception unit 120. Further, the transmission unit 110 and the reception unit 120 may be referred to as a transmitter and a receiver, respectively.

### <Terminal 20>

Fig. 14 is a diagram illustrating an example of a functional configuration of the terminal 20. As shown in FIG. 14, the terminal 20 includes a transmission unit 210, a reception unit 220, a configuration unit 230, and a control unit 240. The functional structure illustrated in Fig. 14 is merely an example. Functional divisions and names of functional units may be anything as long as operations according to an embodiment of the present invention can be performed. The transmission unit 210 and the reception unit 220 may be referred to as a communication unit.

The transmission unit 210 generates a transmission signal from transmission data and transmits the transmission signal wirelessly. The reception unit 220 receives various signals wirelessly and obtains upper layer signals from the received physical layer signals. In addition, the transmission unit 210 transmits a HARQ-ACK, and the reception unit 220 receives configuration information described in the embodiment.

The configuration unit 230 stores, in a storage device, various configuration information items received from the base station 10 via the reception unit 220, and reads them from the storage device if necessary. In addition, the configuration unit 230 stores pre-configured configuration information. The control unit 240 controls the entire terminal 20 including control related to signal transmission and reception. Note the functional unit related to signal transmission in the control unit 240 may be included in the transmission unit 210, and the functional unit related to signal reception in the control unit 240 may be included in the reception unit 220. Further, the transmission unit 210 and the reception unit 220 may be referred to as a transmitter and a receiver, respectively.

### (Hardware structure)

In the above functional structure diagrams used for describing an embodiment of the present invention (Fig. 13 and Fig. 14), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming; broadcasting, notifying, communicating, forwarding, configuring, reconfiguring, allocating, mapping, and assigning, etc. For example, a functional block (component) that functions to transmit is called a transmitting unit or a transmitter. In either case, as described above, the implementation method is not particularly limited.

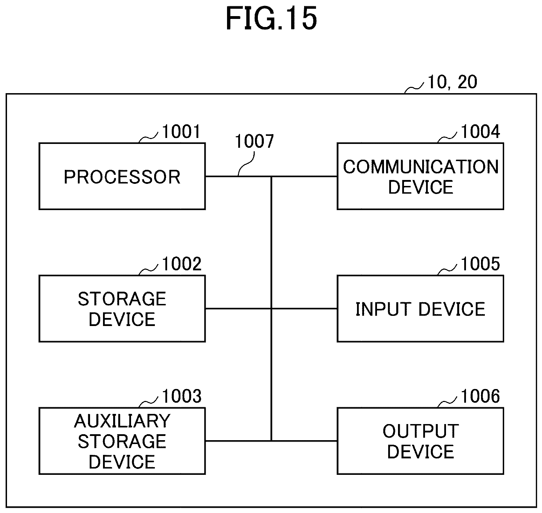

For example, the base station 10, terminal 20, etc., according to an embodiment of the present disclosure may function as a computer for processing the radio communication method of the present disclosure. Fig. 15 is a drawing illustrating an example of hardware structures of the base station 10 and terminal 20 according to an embodiment of the present invention. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "apparatus" can be read as a circuit, a device, a unit, etc. The hardware structures of the base station 10 and terminal 20 may include one or more of each of the devices illustrated in the figure, or may not include some devices.

Each function in the base station 10 and terminal 20 is realized by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 13 may be realized by control programs that are stored in the storage device 1002 and are executed by the processor 1001. Further, for example, the control unit 240 of the terminal 20 illustrated in Fig. 14 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disk, digital versatile disk, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission and reception device) for communicating with computers via at least one of a wired network and a wireless network, and may be referred to as a network device, a network controller, a network card, a communication module, etc. The communication device 1004 may comprise a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and terminal 20 may include hardware such as a micro processor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

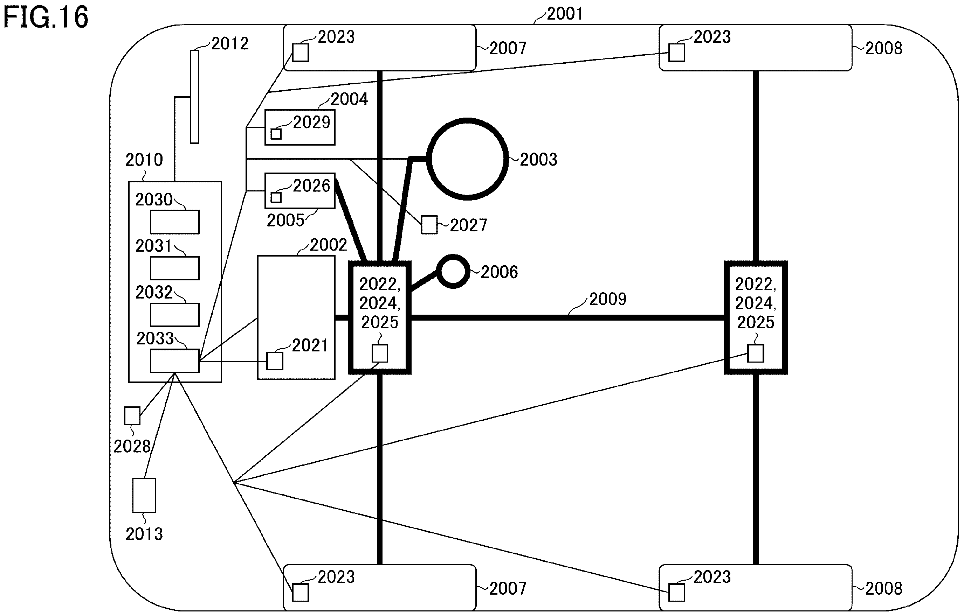

Fig. 16 shows an example of a configuration of a vehicle 2001. As shown in Fig. 16, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel (also called a handle) and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal for detecting an obstacle, a vehicle, a pedestrian, and the like, acquired by an object detection sensor 2028.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver' s operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021-29 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in vehicle 2001.

### (Embodiment summary)

As described above, according to an embodiment of the present invention, a terminal is provided. The terminal includes a reception unit configured to receive downlink data scheduled by SPS (Semi-Persistent Scheduling); a control unit configured to perform at least one of: carrier switching applied to a channel that carries uplink control information; and deferring of HARQ-ACK (Hybrid Automatic Repeat reQuest-ACKnowledgement) corresponding to the downlink data; and
a transmission unit configured to transmit a channel that carries uplink control information including at least the HARQ-ACK by using a resource determined based on at least one of the carrier switching and the deferring of the HARQ-ACK. The control unit performs the carrier switching earlier than the deferring of the HARQ-ACK.

According to the above configuration, when transmitting one or more UCIs, the terminal 20 can determine the resource for transmitting the UCIs by applying PUCCH carrier switching, SPS HARQ-ACK deferring and multiplexing in an appropriate order. In other words, it is possible to determine a procedure of transmitting UCI (Uplink Control Information) in a wireless communication system.

The deferring of the HARQ-ACK may include at least one of: a first deferring to be performed in a slot of a cell before performing the carrier switching; and a second deferring to be performed according to a slot of a cell after performing the carrier switching. With this configuration, the terminal 20 can perform the SPS HARQ-ACK deferring while suppressing the increase in delay.

The control unit may perform the first deferring in a case where the second deferring cannot be applied. With this configuration, the terminal 20 can perform the SPS HARQ-ACK deferring while suppressing the increase in delay.

The control unit may perform a multiplexing operation in a case where the HARQ-ACK corresponding to the downlink data overlaps in a time domain with a channel that carries dynamic HARQ-ACK, uplink control information or data other than HARQ-ACK. The multiplexing operation may be performed before performing the carrier switching. According to above configuration, when transmitting one or more UCIs, the terminal 20 can determine the resource for transmitting the UCIs by applying PUCCH carrier switching, SPS HARQ-ACK deferring and multiplexing in an appropriate order.

The control unit may perform a multiplexing operation in a case where the HARQ-ACK corresponding to the downlink data overlaps in a time domain with a channel that carries dynamic HARQ-ACK, uplink control information or data other than HARQ-ACK. The multiplexing operation may be performed after performing the carrier switching and before performing the deferring of the HARQ-ACK. According to above configuration, when transmitting one or more UCIs, the terminal 20 can determine the resource for transmitting the UCIs by applying PUCCH carrier switching, SPS HARQ-ACK deferring and multiplexing in an appropriate order.

In addition, according to an embodiment of the present invention, a communication method of a terminal is provided. The communication method includes: receiving downlink data scheduled by SPS (Semi-Persistent Scheduling); performing at least one of: carrier switching applied to a channel that carries uplink control information; and deferring of HARQ-ACK (Hybrid Automatic Repeat reQuest-ACKnowledgement) corresponding to the downlink data; and
transmitting a channel that carries uplink control information including at least the HARQ-ACK by using a resource determined based on at least one of the carrier switching and the deferring of the HARQ-ACK. The carrier switching is performed earlier than the deferring of the HARQ-ACK.

According to the above configuration, when transmitting one or more UCIs, the terminal 20 can determine the resource for transmitting the UCIs by applying PUCCH carrier switching, SPS HARQ-ACK deferring and multiplexing in an appropriate order. In other words, it is possible to determine a procedure of transmitting UCI (Uplink Control Information) in a wireless communication system.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information indication may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), 6th generation mobile communication system (6G), xth generation mobile communication system (xG) (xG (x is, for example, an integer, decimal)), FRA (Future Radio Access), NR (new Radio), New radio access (NX), Future generation radio access (FX), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced, modified, developed, or defined therefrom. Further, multiple systems may also be applied in combination (e.g., at least one of LTE and LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) and wireless technologies (infrared, microwave, etc.), at least one of these wired line technologies and wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmission apparatus, reception apparatus, communication apparatus, or the like. The at least one of the base station and the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station and the mobile station may include an apparatus that does not necessarily move during communication operations. For example, at least one of the base station and the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The "determining" may include, for example, a case in which "judging", "calculating", "computing", "processing", "deriving", "investigating", "looking up, search, inquiry" (e.g., looking up a table, database, or other data structures), or "ascertaining" is deemed as "determining". Further, the "determining" may include a case in which "receiving" (e.g., receiving information), "transmitting" (e.g., transmitting information), "inputting", "outputting", or "accessing" (e.g., accessing data in a memory) is deemed as "determining". Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, and printed electrical connections and, as a number of nonlimiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "base on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission and reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in an RB may be the same, regardless of the numerology, and may be 12, for example. The number of subcarriers included in an RB may be determined on the basis of numerology.

Further, the time domain of an RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a terminal 20, one or more BWPs may be configured in one carrier.

At least one of the configured BWPs may be activated, and the terminal 20 may assume that the terminal 20 will not transmit and receive signals/channels outside the activated BWP. It should be noted that the terms "cell" and "carrier" in this disclosure may be replaced by "BWP".

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in an RB, the number of symbols in a TTI, the symbol length, the cyclic prefix (CP) length, and the like, may changed in various ways.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

The present application is based on and claims priority to Japanese patent application No. 2021-133040 filed on August 17, 2021, the entire of which are hereby incorporated herein by reference.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
30 Core network
1001 Processor
1002 Storage device
1003 Auxiliary storage device
1004 Communication device
1005 Input device
1006 Output device
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

## Claims

1. A terminal comprising:
a reception unit configured to receive downlink data scheduled by SPS (Semi-Persistent Scheduling);
a control unit configured to perform at least one of: carrier switching applied to a channel that carries uplink control information; and deferring of HARQ-ACK (Hybrid Automatic Repeat reQuest-ACKnowledgement) corresponding to the downlink data; and
a transmission unit configured to transmit a channel that carries uplink control information including at least the HARQ-ACK by using a resource determined based on at least one of the carrier switching and the deferring of the HARQ-ACK, wherein
the control unit performs the carrier switching earlier than the deferring of the HARQ-ACK.

2. The terminal as claimed in claim 1, wherein the deferring of the HARQ-ACK includes at least one of: a first deferring to be performed in a slot of a cell before performing the carrier switching; and a second deferring to be performed according to a slot of a cell after performing the carrier switching.

3. The terminal as claimed in claim 2, wherein the control unit performs the first deferring in a case where the second deferring cannot be applied.

4. The terminal as claimed in claim 1, wherein the control unit performs a multiplexing operation in a case where the HARQ-ACK corresponding to the downlink data overlaps in a time domain with a channel that carries dynamic HARQ-ACK, uplink control information or data other than HARQ-ACK, and wherein the multiplexing operation is performed before performing the carrier switching.

5. The terminal as claimed in claim 4, wherein the control unit performs a multiplexing operation in a case where the HARQ-ACK corresponding to the downlink data overlaps in a time domain with a channel that carries dynamic HARQ-ACK, uplink control information or data other than HARQ-ACK, and wherein the multiplexing operation is performed after performing the carrier switching and before performing the deferring of the HARQ-ACK.

6. A communication method of a terminal, the communication method comprising:
receiving downlink data scheduled by SPS (Semi-Persistent Scheduling);
performing at least one of: carrier switching applied to a channel that carries uplink control information; and deferring of HARQ-ACK (Hybrid Automatic Repeat reQuest-ACKnowledgement) corresponding to the downlink data;
transmitting a channel that carries uplink control information including at least the HARQ-ACK by using a resource determined based on at least one of the carrier switching and the deferring of the HARQ-ACK; and
performing the carrier switching earlier than the deferring of the HARQ-ACK.
